# EUROPEAN PATENT APPLICATION

(11) **EP 4 761 318 A1**
(43) Date of publication of application: **17.06.2026**
(21) Application number: 23948127.8
(22) Date of filing: 10.08.2023
(51) Int. Cl.: H04W 24/02

(54) **COMMUNICATION METHODS, NETWORK DEVICES, TERMINALS, COMMUNICATION SYSTEM AND STORAGE MEDIUM**

(71) Applicant: Beijing Xiaomi Mobile Software Co., Ltd., Beijing 100085 (CN)
(72) Inventor: LIU, Min, Beijing 100085 (CN)
(74) Representative: Stöckeler, Ferdinand
(86) International application number: PCT/CN2023/112398
(87) International publication number: WO 2025/030557

(57) **Abstract**

The present disclosure provides communication methods, network devices, terminals, a communication system and a storage medium. A method comprises: a network device sends configuration information to a terminal, the configuration information being used for configuring for the terminal at least one group of first reference signals (RSs), and the at least one group of first RSs being used by the terminal to conduct performance monitoring on an artificial intelligence (AI) or machine learning (ML)-based prediction model. In the method of the present disclosure, the network device sends the configuration information to the terminal to configure for the terminal the first RSs used for performance monitoring for the AI or ML-based prediction model, such that the terminal can perform measurement on the basis of the corresponding first RSs so as to conduct performance monitoring on the prediction model.

## Description

### FIELD

The present disclosure relates to the field of communication technologies, and in particular, to a communication method, a network device, a terminal, a communication system and a storage medium.

### BACKGROUND

In enhancements based on artificial intelligence (AI) or machine learning (ML), a terminal-side model may be used for time-domain prediction. The prediction may include different processing stages, for example, a training stage, an inference stage, and a monitoring stage of the prediction model, where the terminal may supervise or monitor the performance of the model in the monitoring stage.

### SUMMARY

In the performance monitoring stage of the prediction model, the network device may not transmit measurement resources corresponding to the reporting occasion, which affects the process of supervision.

The present disclosure provides a communication method, a network device, a terminal, a communication system, and a storage medium.

According to a first aspect, an embodiment of the present disclosure provides a communication method, including:
sending, by a network device, configuration information to a terminal, where the configuration information is used to configure at least one set of first reference signals (RSs) for the terminal, and the at least one set of first RSs is used for the terminal to perform a performance monitoring of a prediction model based on artificial intelligence (AI) or machine learning (ML).

According to a second aspect, an embodiment of the present disclosure provides a communication method, including:
receiving, by a terminal, configuration information sent by a network device, where the configuration information is used to configure at least one set of first RSs for the terminal, and the at least one set of first RSs is used for the terminal to perform a performance monitoring of a prediction model based on AI or ML.

According to a third aspect, an embodiment of the present disclosure provides a network device, including:
a transceiver module, configured to send configuration information to a terminal, where the configuration information is used to configure at least one set of first reference signals (RSs) for the terminal, and the at least one set of first RSs is used for the terminal to perform a performance monitoring of a prediction model based on artificial intelligence (AI) or machine learning (ML).

According to a fourth aspect, an embodiment of the present disclosure provides a terminal, including:
a transceiver module, configured to receive configuration information sent by a network device, where the configuration information is used to configure at least one set of first RSs for the terminal, and the at least one set of first RSs is used for the terminal to perform a performance monitoring of a prediction model based on AI or ML.

According to a fifth aspect, an embodiment of the present disclosure provides a network device, including:
one or more processors;
where the network device performs the method according to the first aspect.

According to a sixth aspect, an embodiment of the present disclosure provides a terminal, including:
one or more processors;
where the terminal performs the method according to the second aspect.

According to a seventh aspect, an embodiment of the present disclosure provides a communication system, including a network device and a terminal, where the network device is configured to implement the method according to the first aspect, and the terminal is configured to implement the method according to the second aspect.

According to an eighth aspect, an embodiment of the present disclosure provides a storage medium, where the storage medium stores instructions which, when run on a communication device, cause the communication device to perform the method according to the first aspect or the method according to the second aspect.

In the method of the present disclosure, the network device sends configuration information to the terminal, thereby configuring a first RS for the terminal for performance monitoring of a prediction model based on AI or ML, so that the terminal can perform measurement according to the corresponding first RS to perform a performance monitoring of the prediction model.

### BRIEF DESCRIPTION OF THE DRAWINGS

To describe the technical solutions in the embodiments of the present disclosure more clearly, the drawings required for describing the embodiments are briefly introduced below. The following drawings are merely some embodiments of the present disclosure and do not limit the specific scope of the present disclosure.
FIG. 1a is a schematic diagram of an architecture of a communication system according to an embodiment of the present disclosure;
FIG. 1b is a schematic diagram of CSI prediction according to an embodiment of the present disclosure;
FIG. 2 is an interaction schematic diagram of a method according to an embodiment of the present disclosure;
FIGS. 3a-3d are flowcharts of a method according to an embodiment of the present disclosure;
FIGS. 4a-4e are flowcharts of a method according to an embodiment of the present disclosure;
FIG. 5a is a schematic structural diagram of a terminal according to an embodiment of the present disclosure;
FIG. 5b is a schematic structural diagram of a network device according to an embodiment of the present disclosure;
FIG. 6a is a schematic diagram of a communication device according to an embodiment of the present disclosure; and
FIG. 6b is a schematic diagram of a communication device according to an embodiment of the present disclosure.

### DETAILED DESCRIPTION

The present disclosure provides a communication method, a network device, a terminal, a communication system, and a storage medium.

According to a first aspect, an embodiment of the present disclosure provides a communication method, including:
sending, by a network device, configuration information to a terminal, where the configuration information is used to configure at least one set of first reference signals (RSs) for the terminal, and the at least one set of first RSs is used for the terminal to perform a performance monitoring of a prediction model based on artificial intelligence (AI) or machine learning (ML).

In the above embodiment, the network device sends configuration information to the terminal, thereby configuring a first RS for the terminal for performance monitoring of a prediction model based on AI or ML, so that the terminal can perform measurement according to the corresponding first RS to perform a performance monitoring of the prediction model.

In combination with some embodiments of the first aspect, in some embodiments, the prediction model is used for time-domain prediction of channel state information (CSI).

In the above embodiment, the network device may configure a first RS for the terminal for use in a monitoring stage of CSI prediction based on AI or ML, thereby monitoring the performance of the CSI prediction model, so that the performance of the CSI prediction model can be learned or adjusted in a timely manner.

In combination with some embodiments of the first aspect, in some embodiments, the at least one set of first RSs is used for the terminal to measure and obtain reference CSI corresponding to a monitoring stage of the CSI time-domain prediction model.

In the above embodiment, the first RS configured by the network device for the terminal is used for the terminal to obtain measurement CSI corresponding to the monitoring stage, and this measurement CSI can serve as reference CSI, facilitating the terminal to perform model performance analysis.

In combination with some embodiments of the first aspect, in some embodiments, a first RS in the at least one set of first RSs includes one or more resources, and the one or more resources respectively have corresponding resource identifiers.

In the above embodiment, the network device can configure one or more resources as a first RS, so that the terminal can perform measurement in the monitoring stage, and resources can be distinguished by corresponding resource identifiers.

In combination with some embodiments of the first aspect, in some embodiments, a first RS in the at least one set of first RSs includes one or more first resource sets;
where the one or more first resource sets respectively include one or more resources.

In the above embodiment, the network device can configure at least one first resource set as a first RS, thereby performing resource configuration for the user equipment.

In combination with some embodiments of the first aspect, in some embodiments, a first RS in the at least one set of first RSs includes one or more first resource configurations, and the one or more first resource configurations respectively include one or more first resource sets.

In the above embodiment, the network device can configure a first resource configuration, configure corresponding resource sets in the first resource configuration, thereby performing resource configuration for the user equipment.

In combination with some embodiments of the first aspect, in some embodiments, the first resource set includes at least one of:
a non-zero power channel state information reference signal (NZP-CSI-RS) resource set;
a channel state information synchronization signal block (CSI-SSB) resource set;
a zero power channel state information reference signal (ZP-CSI-RS) resource set; or
a channel state information interference measurement (CSI-IM) resource set.

In the above embodiment, when the resource sets configured by the network device are different, the resource sets may include corresponding resources, facilitating the terminal to perform measurement according to the corresponding resource sets and resources.

In combination with some embodiments of the first aspect, in some embodiments, at least one of the resource, the first resource set, and the first resource configuration is periodic, semi-persistent, or aperiodic.

In the above embodiment, the network device can configure a periodic, semi-persistent, or aperiodic first RS for the terminal, so that the terminal can perform adaptive measurement according to the nature of the first RS.

In combination with some embodiments of the first aspect, in some embodiments, a first RS meets at least one of:
a first condition in a time domain;
a second condition in a frequency domain;
a third condition in a time-frequency domain; or
a fourth condition in a spatial domain.

In the above embodiment, the first RS configured by the network device can meet corresponding conditions, facilitating that the measurement CSI can be compared with the corresponding prediction CSI, which is beneficial for improving the accuracy and rationality of performance monitoring in the terminal's monitoring stage.

In combination with some embodiments of the first aspect, in some embodiments, the first condition includes at least one of:
a first time at which the first RS is located being the same as a second time or differing from a second time within a set range, where the second time is a prediction time corresponding to at least part of prediction results of the prediction model; or
a first period being the same as a second period, where the first period is a transmission period of the first RS configured by the network device, and the second period is a reporting period of the prediction results indicated by the network device through a first report configuration.

In the above embodiment, conditions satisfied by the first RS configured by the network device in the time domain are illustrated, facilitating a reasonable correspondence in the time domain between the measurement CSI corresponding to the first RS and the prediction CSI.

In combination with some embodiments of the first aspect, in some embodiments, the first report configuration is bound to a first resource configuration, where the first resource configuration includes: a first resource set in which a resource identifier of the first RS is located.

In combination with some embodiments of the first aspect, in some embodiments, the prediction time includes a reporting time of the prediction result;

where the prediction result is predicted CSI, and the reporting time is indicated by the network device through a report configuration corresponding to the prediction result.

In the above embodiment, by configuring the time at which the first RS is located to be the same as the reporting time of the prediction result, the network device causes the measurement result corresponding to the first RS to correspond to the corresponding prediction result, facilitating improvement of the rationality and accuracy of the comparison between them.

In combination with some embodiments of the first aspect, in some embodiments, the second condition includes:

frequency domain information of the first RS being the same as frequency domain information corresponding to a second resource configuration, where the second resource configuration is bound to a first report configuration corresponding to a prediction result, and the second resource configuration is used to configure an RS corresponding to input information of the prediction model.

In the above embodiment, conditions satisfied by the first RS configured by the network device in the frequency domain are illustrated, facilitating a reasonable correspondence in the frequency domain between the measurement CSI corresponding to the first RS and the prediction CSI.

In combination with some embodiments of the first aspect, in some embodiments, the frequency domain information includes at least one of:
an occupied resource block (RB) position;
occupied wideband or narrowband information;
an occupied bandwidth part (BWP);
an occupied frequency band or frequency range (FR); or
an occupied carrier.

In the above embodiment, various types of identical frequency domain information between the first RS configured by the network device and the second resource configuration are illustrated, facilitating adaptive processing in conjunction with different frequency domain scenarios.

In combination with some embodiments of the first aspect, in some embodiments, the third condition includes:
the first RS and the second resource configuration occupying the same time-frequency resource (RE) within one RB.

In the above embodiment, conditions satisfied by the first RS configured by the network device in the time-frequency domain are illustrated, facilitating a reasonable correspondence in the time-frequency domain between the reference CSI corresponding to the first RS and the prediction CSI.

In combination with some embodiments of the first aspect, in some embodiments, the fourth condition includes at least one of:
the first RS using the same beam shape as a second resource configuration;
the first RS using the same precoding matrix as the second resource configuration;
the first RS using the same transmission configuration indicator (TCI) as the second resource configuration; or
the first RS using the same quasi-co-location (QCL) as the second resource configuration;
where the second resource configuration is bound to a first report configuration corresponding to a prediction result, and the second resource configuration is used to configure an RS corresponding to input information of the prediction model.

In the above embodiment, conditions satisfied by the first RS configured by the network device in the spatial domain are illustrated, facilitating a reasonable correspondence in the spatial domain between the measurement CSI corresponding to the first RS and the prediction CSI.

In combination with some embodiments of the first aspect, in some embodiments, a resource identifier of the first RS is the same as part or all of resource identifiers in at least one second resource configuration; and/or
a resource set identifier of the first RS is the same as part or all of resource set identifiers in at least one second resource configuration; and/or
a resource configuration identifier of the first RS is the same as part or all of resource configuration identifiers in at least one second resource configuration;
where the second resource configuration is bound to a first report configuration corresponding to a prediction result, and the second resource configuration is used to configure an RS corresponding to input information of the prediction model.

In the above embodiment, the network device can configure the relationship between the resource identifier of the first RS and the corresponding resource identifier in the second resource configuration, to improve the rationality of the correspondence between the measurement result and the corresponding prediction result.

In combination with some embodiments of the first aspect, in some embodiments, the method further includes:
receiving, by the network device, indication information sent by the terminal, where the indication information is used to indicate that the terminal does not expect that the configured first RS does not meet any of the first condition, the second condition, the third condition, or the fourth condition.

In the above embodiment, the network device receives indication information sent by the terminal to learn about the terminal's expectation or requirement during the configuration of the first RS, facilitating the network device to perform reference configuration.

In combination with some embodiments of the first aspect, in some embodiments, the method further includes:
receiving, by the network device, assistance information sent by the terminal, where the assistance information is used to indicate information of the prediction model, and at least one of the first condition, the second condition, the third condition, and the fourth condition is determined according to the assistance information.

In the above embodiment, the network device receives assistance information sent by the terminal to learn about information of the terminal's prediction model, facilitating the determination of reasonable conditions based on the model information.

In combination with some embodiments of the first aspect, in some embodiments, the assistance information includes at least one of:
a quantity of prediction results of the prediction model;
a time interval between prediction results; or
a time interval between a prediction result and input information of the prediction model.

In the above embodiment, the user equipment can report important parameters related to the prediction model, facilitating the network device to determine accurate and appropriate conditions based on the assistance information, improving the rationality during the performance monitoring process.

In combination with some embodiments of the first aspect, in some embodiments, the first RS meets one of:
the first RS is not bound to a corresponding report configuration;
the first RS is bound to a corresponding report configuration, and a report content indicated in the corresponding report configuration is empty; or
the first RS is bound to a corresponding report configuration, and a report content indicated in the corresponding report configuration is considered to be empty.

In the above embodiment, according to different configuration manners of the first RS and the corresponding report configuration, the network device can indicate that the corresponding report content is empty, so that the terminal can perform reasonable model monitoring without frequently reporting measurement results during the monitoring process, which is beneficial for achieving energy saving of the terminal.

According to a second aspect, an embodiment of the present disclosure provides a communication method, including:
receiving, by a terminal, configuration information sent by a network device, where the configuration information is used to configure at least one set of first RSs for the terminal, and the at least one set of first RSs is used for the terminal to perform a performance monitoring of a prediction model based on AI or ML.

In the above embodiment, the terminal receives configuration information sent by the network device to learn about the first RS used for performance monitoring of a prediction model based on AI or ML, so that the terminal can perform measurement according to the corresponding first RS to perform a performance monitoring of the prediction model.

In combination with some embodiments of the second aspect, in some embodiments, the prediction model is used for time-domain prediction of channel state information (CSI).

In combination with some embodiments of the second aspect, in some embodiments, the method further includes:
measuring, by the terminal, the at least one set of first RSs in a monitoring stage of the CSI time-domain prediction model to obtain reference CSI;
determining, by the terminal, comparison information between the reference CSI and predicted CSI of the CSI time-domain prediction model.

In combination with some embodiments of the second aspect, in some embodiments, the comparison information includes at least one of:
a normalized mean square error (NMSE); or
a square of generalized cosine similarity (SGCS).

In combination with some embodiments of the second aspect, in some embodiments, the reference CSI or the predicted CSI includes at least one of:
channel matrix information;
a codebook parameter predefined or indicated by the network device; or
codeword information of the reference CSI or the predicted CSI under a corresponding codebook parameter.

In combination with some embodiments of the second aspect, in some embodiments, a first RS in the at least one set of first RSs includes one or more resources, and the one or more resources respectively have corresponding resource identifiers.

In combination with some embodiments of the second aspect, in some embodiments, a first RS in the at least one set of first RSs includes one or more first resource sets;
where each first resource set includes the one or more resources.

In combination with some embodiments of the second aspect, in some embodiments, a first RS in the at least one set of first RSs includes one or more first resource configurations, and the one or more first resource configurations respectively include one or more first resource sets.

In combination with some embodiments of the second aspect, in some embodiments, the first resource set includes at least one of:
an NZP-CSI-RS resource set;
a ZP-CSI-RS resource set;
a CSI-SSB resource set; or
a CSI-IM resource set.

In combination with some embodiments of the second aspect, in some embodiments, at least one of the resource, the first resource set, and the first resource configuration is periodic, semi-persistent, or aperiodic.

In combination with some embodiments of the second aspect, in some embodiments, a first RS in the at least one set of first RSs meets at least one of:
a first condition in a time domain;
a second condition in a frequency domain;
a third condition in a time-frequency domain; or
a fourth condition in a spatial domain.

In combination with some embodiments of the second aspect, in some embodiments, the first condition includes at least one of:
a first time at which the first RS is located being the same as a second time or differing from a second time within a set range, where the second time is a prediction time corresponding to at least part of prediction results of the prediction model; or
a first period being the same as a second period, where the first period is a transmission period of the first RS configured by the network device, and the second period is a reporting period of the prediction results indicated by the network device through a first report configuration.

In combination with some embodiments of the second aspect, in some embodiments, the first report configuration is bound to a first resource configuration, where the first resource configuration includes: a first resource set in which a resource identifier of the first RS is located.

In combination with some embodiments of the second aspect, in some embodiments, the prediction time includes a reporting time of the prediction result;
where the prediction result is predicted CSI, and the reporting time is indicated by the network device through a report configuration corresponding to the prediction result.

In combination with some embodiments of the second aspect, in some embodiments, the second condition includes:
frequency domain information of the first RS being the same as frequency domain information corresponding to a second resource configuration, where the second resource configuration is bound to a first report configuration corresponding to a prediction result, and the second resource configuration is used to configure an RS corresponding to input information of the prediction model.

In combination with some embodiments of the second aspect, in some embodiments, the frequency domain information includes at least one of:
an occupied resource block (RB) position;
occupied wideband or narrowband information;
an occupied bandwidth part (BWP);
an occupied frequency band or FR; or
an occupied carrier.

In combination with some embodiments of the second aspect, in some embodiments, the third condition includes:
the first RS and the second resource configuration occupying the same RE within one RB.

In combination with some embodiments of the second aspect, in some embodiments, the fourth condition includes at least one of:
the first RS using the same beam shape as a second resource configuration;
the first RS using the same precoding matrix as the second resource configuration;
the first RS using the same TCI as the second resource configuration; or
the first RS using the same QCL as the second resource configuration;
where the second resource configuration is bound to a first report configuration corresponding to a prediction result, and the second resource configuration is used to configure an RS corresponding to input information of the prediction model.

In combination with some embodiments of the second aspect, in some embodiments, a resource identifier of the first RS is the same as part or all of resource identifiers in at least one second resource configuration; and/or
a resource set identifier of the first RS is the same as part or all of resource set identifiers in at least one second resource configuration;
a resource configuration identifier of the first RS is the same as part or all of resource configuration identifiers in at least one second resource configuration;
where the second resource configuration is bound to a first report configuration corresponding to a prediction result, and the second resource configuration is used to configure an RS corresponding to input information of the prediction model.

In combination with some embodiments of the second aspect, in some embodiments, the method further includes:
sending, by the terminal, indication information to the network device, where the indication information is used to indicate that the terminal does not expect that the configured first RS does not meet any of the first condition, the second condition, the third condition, or the fourth condition.

In combination with some embodiments of the second aspect, in some embodiments, the method further includes:
sending, by the terminal, assistance information to the network device, where the assistance information is used to indicate information of the prediction model, and at least one of the first condition, the second condition, the third condition, and the fourth condition is determined according to the assistance information.

In combination with some embodiments of the second aspect, in some embodiments, the assistance information includes at least one of:
a quantity of prediction results of the prediction model;
a time interval between prediction results; or
a time interval between a prediction result and input information of the prediction model.

In combination with some embodiments of the second aspect, in some embodiments, the first RS meets one of:
the first RS is not bound to a corresponding report configuration;
the first RS is bound to a corresponding report configuration, and a report content indicated in the corresponding report configuration is empty; or
the first RS is bound to a corresponding report configuration, and a report content indicated in the corresponding report configuration is considered to be empty.

According to a third aspect, an embodiment of the present disclosure provides a network device, including:
a transceiver module, configured to send configuration information to a terminal, where the configuration information is used to configure at least one set of first reference signals (RSs) for the terminal, and the at least one set of first RSs is used for the terminal to perform a performance monitoring of a prediction model based on artificial intelligence (AI) or machine learning (ML).

According to a fourth aspect, an embodiment of the present disclosure provides a terminal, including:
a transceiver module, configured to receive configuration information sent by a network device, where the configuration information is used to configure at least one set of first RSs for the terminal, and the at least one set of first RSs is used for the terminal to perform a performance monitoring of a prediction model based on AI or ML.

According to a fifth aspect, an embodiment of the present disclosure provides a network device, including:
one or more processors;
where the network device performs the method according to the first aspect.

According to a sixth aspect, an embodiment of the present disclosure provides a terminal, including:
one or more processors;
where the terminal performs the method according to the second aspect.

According to a seventh aspect, an embodiment of the present disclosure provides a communication system, including a network device and a terminal, where the network device is configured to implement the method according to the first aspect, and the terminal is configured to implement the method according to the second aspect.

According to an eighth aspect, an embodiment of the present disclosure provides a storage medium, where the storage medium stores instructions which, when run on a communication device, cause the communication device to perform the method according to the first aspect or the method according to the second aspect.

According to a ninth aspect, an embodiment of the present disclosure provides a program product, where when the program product is executed by a communication device, the communication device is caused to perform the method described in the optional implementations of the first aspect and the second aspect.

According to a tenth aspect, an embodiment of the present disclosure provides a computer program, where when run on a computer, the computer is caused to perform the method described in the optional implementations of the first aspect and the second aspect.

According to an eleventh aspect, an embodiment of the present disclosure provides a chip or chip system. The chip or chip system includes processing circuitry configured to perform the method described in the optional implementations of the first aspect and the second aspect.

It can be understood that the above terminal, network device, communication system, storage medium, program product, computer program, chip, or chip system are all used to perform the method proposed in the embodiments of the present disclosure. Therefore, the achievable beneficial effects can refer to the beneficial effects in the corresponding method, which are not repeated here.

The embodiments of the present disclosure are not exhaustive, but merely illustrative of some embodiments, and do not constitute a specific limitation to the protection scope of the present disclosure. In case of no conflict, each step in one embodiment can be implemented as an independent embodiment, and the steps can be combined arbitrarily. For example, the solution after removing some steps in one embodiment can also be implemented as an independent embodiment, and the order of the steps in one embodiment can be arbitrarily swapped. In addition, optional implementations in one embodiment can be arbitrarily combined; furthermore, the embodiments can be arbitrarily combined. For example, part or all of the steps of different embodiments can be arbitrarily combined, and optional implementations of one embodiment can be arbitrarily combined with other embodiments.

In the various embodiments of the present disclosure, if there is no special explanation and logical conflict, the terms and/or descriptions among the embodiments are consistent and can refer to each other, and technical features in different embodiments can be combined to form new embodiments based on their inherent logical relationships.

The terms used in the embodiments of the present disclosure are only for the purpose of describing specific embodiments and are not intended to limit the present disclosure.

In the embodiments of the present disclosure, unless otherwise specified, elements expressed in singular form, such as "a", "an", "the", "said", "above-mentioned", "aforementioned", "this", etc., can mean "one and only one", or can also mean "one or more", "at least one", etc. For example, when using articles such as "a", "an", "the" in English in translation, the noun following the article can be understood as singular or plural.

In the embodiments of the present disclosure, "a plurality of" means two or more.

In some embodiments, terms such as "at least one of", "one or more", "a plurality of", "multiple", etc., can be used interchangeably.

In some embodiments, expressions such as "at least one of A and B", "A and/or B", "in one case A, in another case B", "in response to one situation A, in response to another situation B", etc., may include the following technical solutions: in some embodiments A (performing A regardless of B); in some embodiments B (performing B regardless of A); in some embodiments selecting to perform A or B (A and B are selectively performed); in some embodiments A and B (both A and B are performed). When there are more branches such as A, B, C, etc., it is similar to the above.

In some embodiments, expressions such as "A or B", etc., may include the following technical solutions: in some embodiments A (performing A regardless of B); in some embodiments B (performing B regardless of A); in some embodiments selecting to perform A or B (A and B are selectively performed). When there are more branches such as A, B, C, etc., it is similar to the above.

The prefixes such as "first", "second", etc., in the embodiments of the present disclosure are only for distinguishing different objects described, and do not constitute limitations on the position, order, priority, quantity, or content of the described objects. The description of the objects refers to the description in the claims or the context of the embodiments, and should not be considered as an extra limitation due to the use of the prefixes. For example, if the described object is a "field", then the ordinal numbers before "field" in "first field" and "second field" do not limit the position or order between the "fields", and "first" and "second" do not limit whether the "fields" they modify are in the same message, nor do they limit the order of "first field" and "second field". For another example, if the described object is "level", then the ordinal numbers before "level" in "first level" and "second level" do not limit the priority between the "levels". For yet another example, the quantity of the described object is not limited by the ordinal number, and can be one or more. Taking "first device" as an example, the quantity of "device" can be one or more. In addition, objects modified by different prefixes can be the same or different. For example, if the described object is "device", then "first device" and "second device" can be the same device or different devices, and their types can be the same or different. For another example, if the described object is "information", then "first information" and "second information" can be the same information or different information, and their contents can be the same or different.

In some embodiments, "including A", "containing A", "used to indicate A", "carrying A", can be interpreted as directly carrying A, or can also be interpreted as indirectly indicating A.

In some embodiments, terms such as "in response to ...", "in response to determining ...", "in the case of ...", "when ...", "if ...", etc., can be used interchangeably.

In some embodiments, terms such as "greater than", "greater than or equal to", "not less than", "more than", "more than or equal to", "not fewer than", "higher than", "higher than or equal to", "not lower than", "above", etc., can be used interchangeably. Terms such as "less than", "less than or equal to", "not greater than", "fewer than", "fewer than or equal to", "not more than", "lower than", "lower than or equal to", "not higher than", "below", etc., can be used interchangeably.

In some embodiments, apparatuses and devices can be interpreted as physical or virtual, and their names are not limited to the names recorded in the embodiments. In some cases, they can also be understood as "equipment", "device", "circuitry", "network element", "node", "function", "unit", "section", "system", "network", "chip", "chip system", "entity", "subject", etc.

In some embodiments, "network" can be interpreted as a device included in the network, for example, an access network device, a core network device, etc.

In some embodiments, "access network device (AN device)" may also be referred to as "radio access network device (RAN device)", "base station (BS)", "radio base station", "fixed station", and in some embodiments, it may also be understood as "node", "access point", "transmission point (TP)", "reception point (RP)", "transmission and/or reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc.

In some embodiments, "terminal" or "terminal device" may be referred to as "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, etc.

In some embodiments, obtaining data, information, etc., may comply with the laws and regulations of the country where located.

In some embodiments, data, information, etc., may be obtained after obtaining user consent.

Furthermore, each element, each row, or each column in the tables of the embodiments of the present disclosure can be implemented as an independent embodiment, and any combination of elements, rows, or columns can also be implemented as an independent embodiment.

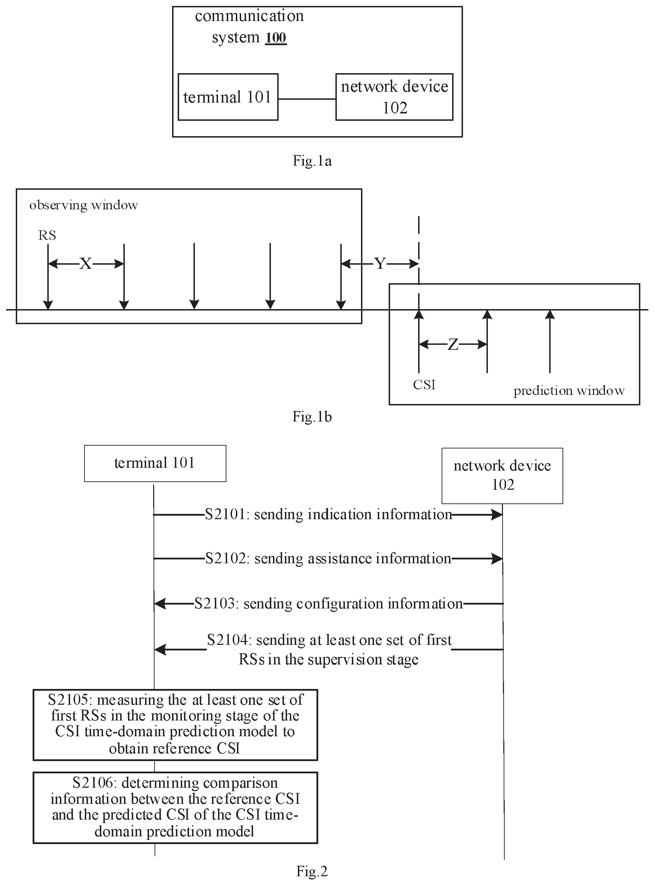

FIG. 1a is a schematic diagram of an architecture of a communication system according to an embodiment of the present disclosure.

As shown in FIG. 1a, a communication system 100 includes a terminal 101 and a network device 102.

In some embodiments, the terminal 101 includes, for example, at least one of a mobile phone, a wearable device, an Internet of Things device, a car with communication function, a smart car, a tablet (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, but is not limited thereto.

In some embodiments, when the network device 102 is a network device, the network device may include at least one of an access network device and a core network device.

In some embodiments, an access network device is, for example, a node or device that connects a terminal to a wireless network. The access network device may include at least one of an evolved Node B (eNB) in a 5G communication system, a next generation evolved Node B (ng-eNB), a next generation Node B (gNB), a Node B (NB), a home Node B (HNB), a home evolved Node B (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in other communication systems, an access node in a wireless fidelity (WiFi) system, but is not limited thereto.

In some embodiments, the technical solution of the present disclosure may be applied to an Open RAN architecture. In this case, interfaces between access network devices or within an access network device involved in the embodiments of the present disclosure may become internal interfaces of the Open RAN, and the processes and information interaction between these internal interfaces can be implemented through software or programs.

In some embodiments, an access network device may be composed of a central unit (CU) and a distributed unit (DU), where the CU may also be called a control unit. Using a CU-DU structure can split the protocol layers of the access network device, with the functions of some protocol layers placed in the CU for centralized control, and the remaining part or all of the functions of the protocol layers distributed in the DUs, with the CU centrally controlling the DUs, but is not limited thereto.

In some embodiments, a core network device may be one device, including one or more network elements, or may be multiple devices or device groups, each including all or part of one or more network elements. The network elements may be virtual or physical. The core network includes, for example, at least one of an Evolved Packet Core (EPC), a 5G Core Network (5GCN), or a Next Generation Core (NGC). Alternatively, the core network device refers to a network element with specific functions, such as an Access Management Function (AMF), a Service Management Function (SMF), etc.

It can be understood that the communication system described in the embodiments of the present disclosure is to illustrate the technical solutions of the embodiments of the present disclosure more clearly and does not constitute a limitation on the technical solutions provided by the embodiments of the present disclosure. Those skilled in the art will understand that with the evolution of system architectures and the emergence of new service scenarios, the technical solutions provided by the embodiments of the present disclosure are also applicable to similar technical problems.

The following embodiments of the present disclosure can be applied to the communication system 100 shown in FIG. 1a, or part of the entities, but are not limited thereto.

The entities shown in FIG. 1a are illustrative. The communication system may include all or part of the entities in FIG. 1a, and may also include other entities not shown in FIG. 1a. The quantity and form of each entity are arbitrary. The connection relationships between the entities are illustrative. The entities may not be connected or may be connected, and the connection may be in any manner, may be direct or indirect, and may be wired or wireless.

The embodiments of the present disclosure can be applied to Long Term Evolution (LTE), LTE-Advanced (LTE-A), LTE-Beyond (LTE-B), SUPER 3G, IMT-Advanced, a fourth-generation mobile communication system (4G), a fifth-generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a Public Land Mobile Network (PLMN) network, a Device-to-Device (D2D) system, a Machine to Machine (M2M) system, an Internet of Things (IoT) system, Vehicle-to-Everything (V2X), systems using other communication processing methods, next-generation systems extended based on them, etc. In addition, a combination of multiple systems (for example, a combination of LTE or LTE-A and 5G, etc.) may also be applied.

In the embodiments of the present disclosure, channel state information (CSI) prediction is taken as an example for description. Referring to FIG. 1b, in AI-based or ML-based CSI prediction, an observation window and a prediction window may be used to define different CSIs. Within the observation window, the network device 102 may transmit CSI Reference Signals (CSI-RSs), and the terminal 101 measures the RSs within the observation window to obtain measurement results such as measurement CSI; the terminal 101 inputs the measurement results after preprocessing into the prediction model to obtain prediction results such as prediction CSI within the prediction window.

As shown in FIG. 1b, some important parameters are involved in CSI prediction. The observation window includes M measurement CSIs, and the prediction window includes N prediction CSIs, where M and N are positive integers. The time interval between adjacent measurement CSIs in the observation window is X, the time interval between the first prediction CSI in the prediction window and the last measurement CSI in the observation window is Y, and the time interval between adjacent prediction CSIs in the prediction window is Z. The unit of X, Y, Z is a time-domain unit. The time-domain unit is a slot, half-slot, sub-slot, or symbol. Taking a slot as an example, the time interval can be the number of slots under a certain subcarrier spacing (SCS).

The sample interval used for prediction and the prediction CSI interval can be different. Corresponding to FIG. 1b, the sample interval in the observation window can be considered as the CSI-RS interval. The network device 102 can configure corresponding CSI report or reporting moments according to the CSI/RS interval in the observation window.

In the embodiments of the present disclosure, in the performance monitoring stage or supervision stage of the prediction model, the terminal 101 needs to calculate metrics (metric or Key Performance Indicator, KPI) for the supervision stage based on measurements to determine or verify whether the prediction model is suitable for the current channel or is accurate. CSI prediction is still taken as an example for description.

In one case, the network device 102 transmits RSs according to the RS transmission period of the observation window, which includes RSs at the CSI prediction moment or reporting moment, for example, the RS transmission period is the same as the CSI prediction or reporting period. In this case, the network device 102 does not need to perform additional RS configuration, and the terminal 101 can use the measurement RS to complete model supervision.

In another case, the network device 102 transmits RSs according to the RS transmission period of the observation window, but does not include or transmit RSs at the CSI prediction moment or reporting moment, for example, the RS transmission period is different from the CSI prediction or reporting period. In this case, it is necessary to determine the relevant behavior of the network device 102 or the terminal 101 so that model performance monitoring can be performed.

In the embodiments of the present disclosure, a method for configuring RSs in the supervision stage or the performance monitoring stage of the prediction model is provided.

FIG. 2 is an interaction schematic diagram of a communication method according to an embodiment of the present disclosure. As shown in FIG. 2, an embodiment of the present disclosure relates to a communication method. The above method includes:

Step S2101, the terminal 101 sending indication information to the network device 102.

In some embodiments, the indication information is used to indicate that the terminal does not expect that the configured first RS does not meet any of the first condition, the second condition, the third condition, or the fourth condition.

In some embodiments, the indication information is used to indicate that the terminal does not expect that the configured first RS does not meet at least one of the first condition, the second condition, the third condition, and the fourth condition.

In some embodiments, the terminal 101 may send the indication information before the network device 102 sends the configuration information, thereby providing a reference for the configuration by the network device 102.

Optionally, the network device 102 may configure at least one set of first RSs for the terminal 101 through the configuration information, and the at least one set of first RSs is used for the terminal 101 to perform a performance monitoring of a prediction model based on AI or ML.

Optionally, the first RS may also be called Monitor-RS.

In some embodiments, the first condition is a condition or rule that the first RS configured by the network device 102 needs to meet in the time domain, the second condition is a condition or rule that the first RS needs to meet in the frequency domain, the third condition is a condition or rule that the first RS needs to meet in the time-frequency domain, and the fourth condition is a condition or rule that the first RS needs to meet in the spatial domain.

In some embodiments, the first condition includes at least one of:
a first time at which the first RS is located being the same as a second time or differing from a second time within a set range, where the second time is a prediction time corresponding to at least part of prediction results of the prediction model; or
a first period being the same as a second period, where the first period is a transmission period of the first RS configured by the network device, and the second period is a reporting period of the prediction results indicated by the network device through a first report configuration.

Optionally, the first time at which the first RS is located may be the time at which the network device 102 sends the first RS (i.e., the transmission time of the first RS), or the time at which the terminal 101 receives the first RS. In this embodiment of the present disclosure, the first time is taken as the time at which the network device 102 sends the first RS as an example for description.

Optionally, the prediction time includes a reporting time of the prediction result;
where the prediction result is predicted CSI, and the reporting time is indicated by the network device through a report configuration corresponding to the prediction result.

Optionally, the first report configuration is bound to a first resource configuration, where the first resource configuration includes: a first resource set in which a resource identifier of the first RS is located.

Optionally, the first report configuration is used to configure reporting parameters such as the reporting time, reporting period, and report quantity of the predicted CSI.

In some embodiments, the second condition includes:
frequency domain information of the first RS being the same as frequency domain information corresponding to a second resource configuration, where the second resource configuration is bound to a first report configuration corresponding to a prediction result, and the second resource configuration is used to configure an RS corresponding to input information of the prediction model.

Optionally, in conjunction with FIG. 1b, the input information of the prediction model may be the measurement CSI obtained by measuring CSI-RS within the observation window, or the information after preprocessing the measurement CSI.

Optionally, the second resource configuration is used to configure CSI-RS within the observation window.

Optionally, the second resource configuration has a binding relationship with a report configuration within the prediction window. For example, the first report configuration is bound to the second resource configuration. For a first RS, such as a first resource configuration, reconfigured by the network device 102, there is a corresponding relationship with the first report configuration. Therefore, the terminal 101 can measure and obtain reference CSI according to the first resource configuration in the supervision stage, and compare the reference CSI with the corresponding prediction CSI to perform model performance monitoring. It can be understood that the measurement CSI in the supervision stage can be recorded as reference CSI in the embodiments of the present disclosure.

Optionally, the second resource configuration may be a resource configuration corresponding to the prediction CSI at the time when the first RS is located.

Optionally, the frequency domain information includes at least one of:
an occupied resource block (RB) position;
occupied wideband or narrowband information;
an occupied bandwidth part (BWP);
an occupied frequency band or frequency range (FR); or
an occupied carrier.

Optionally, FR may include FR1 or FR2, where FR1 is less than 6 GHz, and FR2 is greater than 28 GHz.

Optionally, in the frequency domain, the ranges of RB, BWP, carrier, frequency band, and FR increase sequentially. Therefore, the defined frequency domain information can define or restrict the second condition according to different frequency domain granularities.

In some embodiments, the third condition includes:
the first RS and the second resource configuration occupying the same time-frequency resource (RE) within one RB. Where one RB occupies 1 slot or 14 symbols in the time domain and 12 subcarriers in the frequency domain.

In some embodiments, the fourth condition includes at least one of:
the first RS using the same beam shape as a second resource configuration;
the first RS using the same precoding matrix as the second resource configuration;
the first RS using the same transmission configuration indicator (TCI) as the second resource configuration; or
the first RS using the same quasi-co-located (QCL) as the second resource configuration;
where the second resource configuration is bound to a first report configuration corresponding to a prediction result, and the second resource configuration is used to configure an RS corresponding to input information of the prediction model.

In some embodiments, a resource identifier of the first RS is the same as part or all of resource identifiers in at least one second resource configuration; and/or
a resource set identifier of the first RS is the same as part or all of resource set identifiers in at least one second resource configuration; and/or
a resource configuration identifier of the first RS is the same as part or all of resource configuration identifiers in at least one second resource configuration;
where the second resource configuration is bound to a first report configuration corresponding to a prediction result, and the second resource configuration is used to configure an RS corresponding to input information of the prediction model.

Optionally, by limiting that the resource identifier of the first RS is the same as at least part of the resource identifiers in the second resource configuration, the first RS is made similar or corresponding to the RS configured in the second resource configuration, which facilitates improving the rationality and accuracy of the comparison between the reference CSI based on the first RS and the prediction CSI based on the second resource configuration.

Optionally, a first RS in the at least one set of first RSs includes one or more resources, and the one or more resources respectively have corresponding resource identifiers. For details, please refer to the description in the following embodiments.

In some embodiments, the network device 102 receives the indication information sent by the terminal 101.

Step S2102, the terminal 101 sending assistance information to the network device 102.

In some embodiments, the assistance information is used to indicate information of the prediction model, and at least one of the first condition, the second condition, the third condition, and the fourth condition is determined according to the assistance information.

In some embodiments, the assistance information includes at least one of:
a quantity of prediction results of the prediction model;
a time interval between prediction results; or
a time interval between a prediction result and input information of the prediction model.

Optionally, referring to FIG. 1b, the quantity of prediction results may be, for example, the quantity of prediction CSIs in the prediction window.

Optionally, the time interval between prediction results is, for example, Z.

Optionally, the input information is, for example, the measurement CSI obtained based on RSs within the observation window, or the information after preprocessing the measurement CSI. The time interval between the prediction result and the input information is, for example, Y.

Optionally, the unit of the above time interval may be a slot or millisecond, etc.

In some embodiments, the network device 102 receives the assistance information sent by the terminal 101.

In some embodiments, step S2102 may be performed before step S2101.

Step S2103, the network device 102 sending configuration information to the terminal 101.

In some embodiments, the configuration information is used to configure at least one set of first reference signals (RSs) for the terminal, and the at least one set of first RSs is used for the terminal to perform a performance monitoring of a prediction model based on AI or ML.

In some embodiments, the network device 102 may send the configuration information via Radio Resource Control (RRC) information.

In some embodiments, the prediction model based on AI or ML is deployed at the terminal 101 side.

Optionally, the prediction model may be an AI-based MIMO enhancement model.

In some embodiments, the prediction model is used for time-domain prediction of CSI.

Optionally, the at least one set of first RSs is used for the terminal to measure and obtain reference CSI corresponding to the monitoring stage of the CSI time-domain prediction model.

In some embodiments, a first RS in the at least one set of first RSs includes one or more resources, and the one or more resources respectively have corresponding resource identifiers.

In this embodiment, one or more resources can be configured as a first RS.

Optionally, the resource corresponding to the first RS may be periodic, semi-persistent, or aperiodic.

In one example, a first RS in the at least one set of first RSs includes one or more first resource sets; where the one or more first resource sets respectively include one or more resources.

In this example, by configuring a first resource set as a first RS, each first resource set is configured with corresponding resources.

Optionally, the first resource set may be periodic, semi-persistent, or aperiodic.

In another example, a first RS includes one or more first resource configurations (or resource settings), and each first resource configuration includes one or more first resource sets.

In this example, by configuring a first resource configuration, resources or resource sets are configured separately or classified.

Optionally, the first resource configuration may be periodic, semi-persistent, or aperiodic.

Optionally, taking a periodic or semi-persistent first resource set as an example, for multiple resources in the same first resource set, the multiple resources or the resource identifiers of the multiple resources can be configured with the same period and the same starting offset.

In some embodiments, in combination with the different configuration methods of the above examples, at least one of the resource, the first resource set, and the first resource configuration is periodic, semi-persistent, or aperiodic.

In some embodiments, the first resource set includes at least one of:
a non-zero power channel state information reference signal (NZP-CSI-RS) resource set;
a channel state information synchronization signal block (CSI-SSB) resource set;
a zero power channel state information reference signal (ZP-CSI-RS) resource set; or
a channel state information interference measurement (CSI-IM) resource set.

In some embodiments, a first RS meets at least one of:
a first condition in a time domain;
a second condition in a frequency domain;
a third condition in a time-frequency domain; or
a fourth condition in a spatial domain.

The first condition, the second condition, the third condition, or the fourth condition can refer to the description in the foregoing embodiments.

In some embodiments, a first RS meets one of:
the first RS is not bound to a corresponding report configuration;
the first RS is bound to a corresponding report configuration, and a report content indicated in the corresponding report configuration is empty (none); or
the first RS is bound to a corresponding report configuration, and a report content indicated in the corresponding report configuration is considered to be empty.

Optionally, according to the configuration of this embodiment, after the terminal obtains the reference CSI and comparison information in the supervision stage, it may not report them, or report them only when the comparison information meets a corresponding threshold or event, to save energy consumption of the terminal and the network device.

For example, the first RS is bound to a first report configuration (CSI report config). The report configuration can refer to the following manner:

The RRC IE configuration (RRC information element) Report config includes CSI-ReportConfigId. Furthermore, the IE configuration corresponding to CSI-ReportConfigID includes report quantity, and the report quantity is configured as none;

The RRC IE Report config includes ResourceForChannelMeasurement. Furthermore, the IE configuration corresponding to CSI-ResourceConfigId includes NZP-CSI-RS-ResourceSet. This NZP-CSI-RS-ResourceSet is configured for monitoring, i.e., Monitor-Info ENUMERATED {true};

The RRC IE Report config includes csi-IM-ResourcesForInterference. Furthermore, the IE configuration corresponding to CSI-ResourceConfigId includes ZP-CSI-RS-ResourceSet. This ZP-CSI-RS-ResourceSet is configured for monitoring, i.e., Monitor-Info ENUMERATED {true}.

In some embodiments, the terminal 101 receives the configuration information.

Step S2104, the network device 102 sending at least one set of first RSs in the supervision stage.

In some embodiments, relevant time-frequency parameters for transmitting the first RS by the network device 102 may be included in the configuration information, so that the terminal 101 can monitor and receive the first RS at appropriate time-frequency positions according to the configuration information.

Step S2105, the terminal 101 measuring the at least one set of first RSs in the monitoring stage of the CSI time-domain prediction model to obtain reference CSI.

Optionally, the terminal measures the received first RSs, and the obtained measurement CSI serves as reference CSI.

For example, the terminal measures the first RS to obtain channel matrix information, a codebook parameter predefined or indicated by the network device, or codeword information of the reference CSI or the predicted CSI under a corresponding codebook parameter, as the reference CSI.

Step S2106, the terminal 101 determining comparison information between the reference CSI and the predicted CSI of the CSI time-domain prediction model.

In some embodiments, the comparison information includes at least one of:
a normalized mean square error (NMSE); or
a square of generalized cosine similarity (SGCS).

In some embodiments, the reference CSI or the predicted CSI includes at least one of:
channel matrix information;
a codebook parameter predefined or indicated by the network device; or
codeword information of the reference CSI or the predicted CSI under a corresponding codebook parameter.

In some embodiments, the names such as "information", "message", "signal", "signaling", "report", "configuration", "indication", "instruction", "command", "channel", "parameter", "field", "field", etc., can be used interchangeably.

In some embodiments, "obtain", "acquire", "receive", "transmit", "bidirectional transmission", "send and/or receive" can be used interchangeably, which can be interpreted as receiving from another entity, obtaining from a protocol, obtaining from a higher layer, obtaining through its own processing, autonomous implementation, and other meanings.

In some embodiments, "send", "transmit", "report", "deliver", "transmit", "bidirectional transmission", "send and/or receive", and other terms can be used interchangeably.

In some embodiments, "uplink", "uplink link", "physical uplink", and other terms can be used interchangeably. "Downlink", "downlink link", "physical downlink", and other terms can be used interchangeably. "Side", "sidelink", "sidelink communication", "direct link", "direct link communication", and other terms can be used interchangeably.

In some embodiments, "downlink control information (DCI)", "downlink (DL) allocation", "DL DCI", "uplink (UL) grant", "UL DCI", and other terms can be used interchangeably.

In some embodiments, "physical downlink shared channel (PDSCH)", "DL data", and other terms can be used interchangeably. "Physical uplink shared channel (PUSCH)", "UL data", and other terms can be used interchangeably.

In some embodiments, "component carrier (CC)", "cell", "frequency carrier", "carrier frequency", and other terms can be used interchangeably.

In some embodiments, "certain", "preset", "preset", "set", "indicated", "a certain", "any", "first", and other terms can be used interchangeably. "Certain A", "preset A", "preset A", "set A", "indicated A", "a certain A", "any A", "first A" can be interpreted as A predetermined in a protocol, etc., can also be interpreted as A obtained through setting, configuration, or indication, etc., can also be interpreted as a specific A, a certain A, any A, or a first A, etc., but is not limited thereto.

In some embodiments, determination or judgment can be performed through a value represented by 1 bit (0 or 1), through a true or false value (Boolean value) represented by true or false, or through comparison of numerical values (e.g., comparison with a predetermined value), but is not limited thereto.

In some embodiments, "does not expect to receive" can be interpreted as not receiving on time domain resources and/or frequency domain resources, or can be interpreted as not performing subsequent processing on the data, etc., after receiving the data, etc.; "does not expect to send" can be interpreted as not sending, or can be interpreted as sending but not expecting the receiver to respond to the sent content.

The communication method involved in the embodiments of the present disclosure may include at least one of steps S2101 to S2106. For example, step S2103 can be implemented as an independent embodiment, steps S2103 to S2106 can be implemented as an independent embodiment, steps S2102 to S2103 can be implemented as an independent embodiment, steps S2101 and S2103 can be implemented as an independent embodiment, but are not limited thereto.

In some embodiments, steps S2101, S2102, S2104, S2105, S2106 are optional, and in different embodiments, one or more of these steps may be omitted or substituted.

In some embodiments, the order of steps S2101 and S2102 may be exchanged or executed simultaneously.

In some embodiments, reference may be made to other optional implementation methods recorded before or after the description corresponding to FIG. 2.

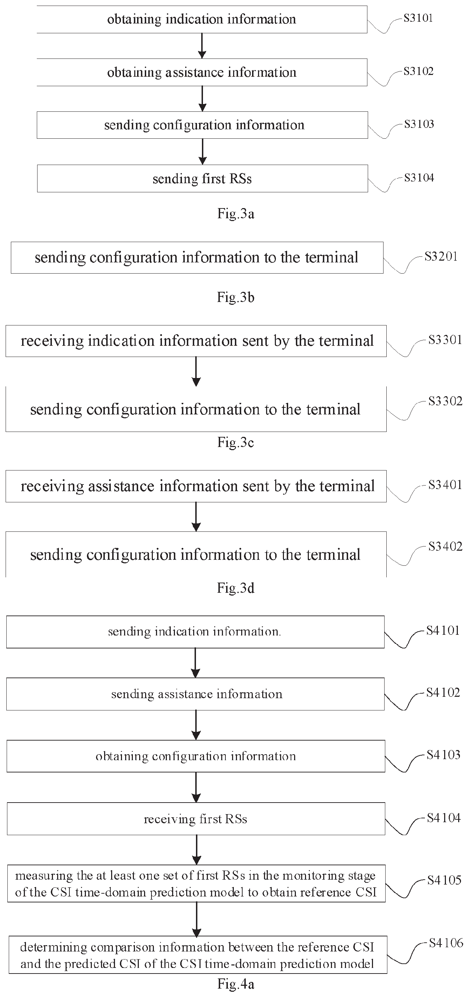

FIG. 3a is a schematic diagram of a communication method according to an embodiment of the present disclosure. As shown in FIG. 3a, an embodiment of the present disclosure relates to a communication method, which is performed by the network device 102. The above method includes:

Step S3101, the network device 102 obtaining indication information.

In some embodiments, the implementation of step S3101 may refer to the relevant implementation of step S2101, which will not be repeated here.

In some embodiments, the network device 102 may obtain or receive indication information from the terminal 101 or other entities.

Step S3102, the network device 102 obtaining assistance information.

In some embodiments, the implementation of step S3102 may refer to the relevant implementation of step S2102, which will not be repeated here.

In some embodiments, the network device 102 may obtain or receive assistance information from the terminal 101 or other entities.

Step S3103, the network device 102 sending configuration information.

In some embodiments, the implementation of step S3103 may refer to the relevant implementation of step S2103, which will not be repeated here.

In some embodiments, the network device 102 may send configuration information to the terminal 101 or other entities.

Step S3104, the network device 102 sending first RSs.

In some embodiments, the implementation of step S3104 may refer to the relevant implementation of step S2104, which will not be repeated here.

The communication method involved in the embodiments of the present disclosure may include at least one of steps S3101 to S3104. For example, step S3103 can be implemented as an independent embodiment, steps S3103 to S3104 can be implemented as an independent embodiment, steps S3102 to S3103 can be implemented as an independent embodiment, steps S3101 and S3103 can be implemented as an independent embodiment, but are not limited thereto.

In some embodiments, steps S3101, S3102, S3104 are optional, and in different embodiments, one or more of these steps may be omitted or substituted.

In some embodiments, the order of steps S3101 and S3102 may be exchanged or executed simultaneously.

In some embodiments, reference may be made to other optional implementation methods recorded before or after the description corresponding to FIG. 3a.

FIG. 3b is a schematic diagram of a communication method according to an embodiment of the present disclosure. As shown in FIG. 3b, an embodiment of the present disclosure relates to a communication method, which is performed by the network device 102. The above method includes:

Step S3201, the network device 102 sending configuration information to the terminal 101.

In some embodiments, the implementation of step S3201 may refer to the relevant implementation of step S2103, which will not be repeated here.

In some embodiments, the prediction model is used for time-domain prediction of channel state information (CSI).

In some embodiments, a first RS in the at least one set of first RSs includes one or more resources, and the one or more resources respectively have corresponding resource identifiers.

Optionally, a first RS in the at least one set of first RSs includes one or more first resource sets;
where each first resource set includes the one or more resources.

Optionally, a first RS in the at least one set of first RSs includes one or more first resource configurations, and the one or more first resource configurations respectively include one or more first resource sets.

In some embodiments, the first resource set includes at least one of:
an NZP-CSI-RS resource set;
a ZP-CSI-RS resource set;
a CSI-SSB resource set; or
a CSI-IM resource set.

In some embodiments, at least one of the resource, the first resource set, and the first resource configuration is periodic, semi-persistent, or aperiodic.

In some embodiments, a first RS meets at least one of:
a first condition in a time domain;
a second condition in a frequency domain;
a third condition in a time-frequency domain; or
a fourth condition in a spatial domain.

In a first example, the first condition includes at least one of:
a first time at which the first RS is located being the same as a second time or differing from a second time within a set range, where the second time is a prediction time corresponding to at least part of prediction results of the prediction model; or
a first period being the same as a second period, where the first period is a transmission period of the first RS configured by the network device, and the second period is a reporting period of the prediction results indicated by the network device through a first report configuration.

Optionally, the first report configuration is bound to a first resource configuration, where the first resource configuration includes: a first resource set in which a resource identifier of the first RS is located.

Optionally, the prediction time includes a reporting time of the prediction result;
where the prediction result is predicted CSI, and the reporting time is indicated by the network device through a report configuration corresponding to the prediction result.

In a second example, the second condition includes:
frequency domain information of the first RS being the same as frequency domain information corresponding to a second resource configuration, where the second resource configuration is bound to a first report configuration corresponding to a prediction result, and the second resource configuration is used to configure an RS corresponding to input information of the prediction model.

Optionally, the frequency domain information includes at least one of:
an occupied resource block (RB) position;
occupied wideband or narrowband information;
an occupied bandwidth part (BWP);
an occupied frequency band or FR; or
an occupied carrier.

In a third example, the third condition includes:
the first RS and the second resource configuration occupying the same RE within one RB.
In a fourth example, the fourth condition includes at least one of:
the first RS using the same beam shape as a second resource configuration;
the first RS using the same precoding matrix as the second resource configuration;
the first RS using the same TCI as the second resource configuration; or
the first RS using the same QCL as the second resource configuration;
where the second resource configuration is bound to a first report configuration corresponding to a prediction result, and the second resource configuration is used to configure an RS corresponding to input information of the prediction model.

In some embodiments, a resource identifier of the first RS is the same as part or all of resource identifiers in at least one second resource configuration; and/or
a resource set identifier of the first RS is the same as part or all of resource set identifiers in at least one second resource configuration;
a resource configuration identifier of the first RS is the same as part or all of resource configuration identifiers in at least one second resource configuration;
where the second resource configuration is bound to a first report configuration corresponding to a prediction result, and the second resource configuration is used to configure an RS corresponding to input information of the prediction model.

In some embodiments, the first RS meets one of:
the first RS is not bound to a corresponding report configuration;
the first RS is bound to a corresponding report configuration, and a report content indicated in the corresponding report configuration is empty; or
the first RS is bound to a corresponding report configuration, and a report content indicated in the corresponding report configuration is considered to be empty.

In some embodiments, reference may be made to other optional implementation methods recorded before or after the description corresponding to FIG. 3b.

FIG. 3c is a schematic diagram of a communication method according to an embodiment of the present disclosure. As shown in FIG. 3c, an embodiment of the present disclosure relates to a communication method, which is performed by the network device 102. The above method includes:

Step S3301, the network device 102 receiving indication information sent by the terminal 101.

In some embodiments, the implementation of step S3301 may refer to the relevant implementation of step S2101, which will not be repeated here.

Step S3302, the network device 102 sending configuration information to the terminal 101.

In some embodiments, the implementation of step S3302 may refer to the relevant implementation of step S2103, which will not be repeated here.

In some embodiments, reference may be made to other optional implementation methods recorded before or after the description corresponding to FIG. 3c.

FIG. 3d is a schematic diagram of a communication method according to an embodiment of the present disclosure. As shown in FIG. 3d, an embodiment of the present disclosure relates to a communication method, which is performed by the network device 102. The above method includes:

Step S3401, the network device 102 receiving assistance information sent by the terminal 101.

In some embodiments, the implementation of step S3401 may refer to the relevant implementation of step S2102, which will not be repeated here.

Step S3402, the network device 102 sending configuration information to the terminal 101.

In some embodiments, the implementation of step S3402 may refer to the relevant implementation of step S2103, which will not be repeated here.

In some embodiments, reference may be made to other optional implementation methods recorded before or after the description corresponding to FIG. 3d.

FIG. 4a is a schematic diagram of a communication method according to an embodiment of the present disclosure. As shown in FIG. 4a, an embodiment of the present disclosure relates to a communication method, which is performed by the terminal 101. The above method includes:

Step S4101, the terminal 101 sending indication information.

In some embodiments, the implementation of step S4101 may refer to the relevant implementation of step S2101, which will not be repeated here.

In some embodiments, the terminal 101 may send indication information to the network device 102 or other entities.

Step S4102, the terminal 101 sending assistance information.

In some embodiments, the implementation of step S4102 may refer to the relevant implementation of step S2102, which will not be repeated here.

In some embodiments, the terminal 101 may send assistance information to the network device 102 or other entities.

Step S4103, the terminal 101 obtaining configuration information.

In some embodiments, the implementation of step S4103 may refer to the relevant implementation of step S2103, which will not be repeated here.

In some embodiments, the terminal 101 may obtain or receive configuration information from the network device 102 or other entities.

Step S4104, the terminal 101 receiving first RSs.

In some embodiments, the implementation of step S4104 may refer to the relevant implementation of step S2104, which will not be repeated here.

Step S4105, the terminal 101 measuring the at least one set of first RSs in the monitoring stage of the CSI time-domain prediction model to obtain reference CSI.

In some embodiments, the implementation of step S4105 may refer to the relevant implementation of step S2105, which will not be repeated here.

Step S4106, the terminal 101 determining comparison information between the reference CSI and the predicted CSI of the CSI time-domain prediction model.

In some embodiments, the implementation of step S4106 may refer to the relevant implementation of step S2106, which will not be repeated here.

The communication method involved in the embodiments of the present disclosure may include at least one of steps S4101 to S4106. For example, step S4103 can be implemented as an independent embodiment, steps S4103 to S4106 can be implemented as an independent embodiment, steps S4102 to S4103 can be implemented as an independent embodiment, steps S4101 and S4103 can be implemented as an independent embodiment, but are not limited thereto.

In some embodiments, the order of steps S4101 and S4102 may be exchanged or executed simultaneously.

In some embodiments, reference may be made to other optional implementation methods recorded before or after the description corresponding to FIG. 4a.

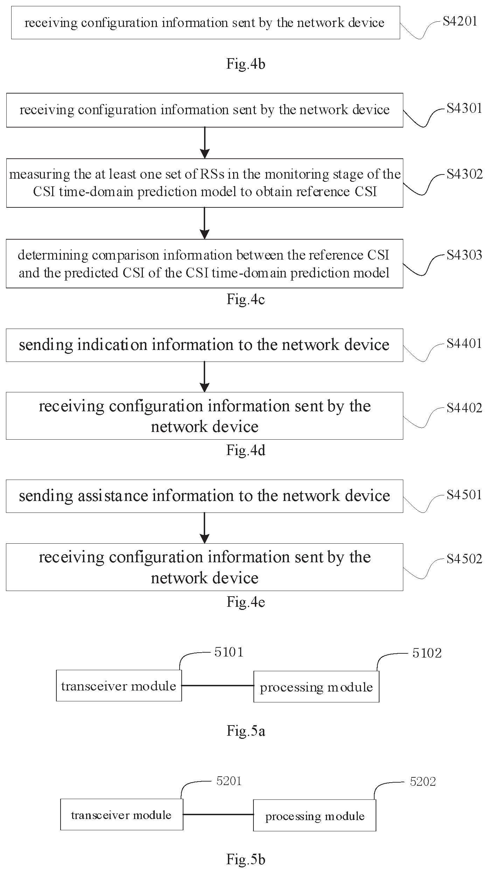

FIG. 4b is a schematic diagram of a communication method according to an embodiment of the present disclosure. As shown in FIG. 4b, an embodiment of the present disclosure relates to a communication method, which is performed by the terminal 101. The above method includes:

Step S4201, the terminal 101 receiving configuration information sent by the network device 102.

In some embodiments, the implementation of step S4201 may refer to the relevant implementation of step S2103, which will not be repeated here.

In some embodiments, the prediction model is used for time-domain prediction of channel state information (CSI).

In some embodiments, a first RS in the at least one set of first RSs includes one or more resources, and the one or more resources respectively have corresponding resource identifiers.

Optionally, a first RS in the at least one set of first RSs includes one or more first resource sets;
where each first resource set includes the one or more resources.

Optionally, a first RS in the at least one set of first RSs includes one or more first resource configurations, and the one or more first resource configurations respectively include one or more first resource sets.

In some embodiments, the first resource set includes at least one of:
an NZP-CSI-RS resource set;
a ZP-CSI-RS resource set;
a CSI-SSB resource set; or
a CSI-IM resource set.

In some embodiments, at least one of the resource, the first resource set, and the first resource configuration is periodic, semi-persistent, or aperiodic.

In some embodiments, a first RS meets at least one of:
a first condition in a time domain;
a second condition in a frequency domain;
a third condition in a time-frequency domain; or
a fourth condition in a spatial domain.

In a first example, the first condition includes at least one of:
a first time at which the first RS is located being the same as a second time or differing from a second time within a set range, where the second time is a prediction time corresponding to at least part of prediction results of the prediction model; or
a first period being the same as a second period, where the first period is a transmission period of the first RS configured by the network device, and the second period is a reporting period of the prediction results indicated by the network device through a first report configuration.

Optionally, the first report configuration is bound to a first resource configuration, where the first resource configuration includes: a first resource set in which a resource identifier of the first RS is located.

Optionally, the prediction time includes a reporting time of the prediction result;
where the prediction result is predicted CSI, and the reporting time is indicated by the network device through a report configuration corresponding to the prediction result.

In a second example, the second condition includes:
frequency domain information of the first RS being the same as frequency domain information corresponding to a second resource configuration, where the second resource configuration is bound to a first report configuration corresponding to a prediction result, and the second resource configuration is used to configure an RS corresponding to input information of the prediction model.

Optionally, the frequency domain information includes at least one of:
an occupied resource block (RB) position;
occupied wideband or narrowband information;
an occupied bandwidth part (BWP);
an occupied frequency band or FR; or
an occupied carrier.

In a third example, the third condition includes:
the first RS and the second resource configuration occupying the same RE within one RB.

In a fourth example, the fourth condition includes at least one of:
the first RS using the same beam shape as a second resource configuration;
the first RS using the same precoding matrix as the second resource configuration;
the first RS using the same TCI as the second resource configuration; or
the first RS using the same QCL as the second resource configuration;
where the second resource configuration is bound to a first report configuration corresponding to a prediction result, and the second resource configuration is used to configure an RS corresponding to input information of the prediction model.

In some embodiments, a resource identifier of the first RS is the same as part or all of resource identifiers in at least one second resource configuration; and/or
a resource set identifier of the first RS is the same as part or all of resource set identifiers in at least one second resource configuration;
a resource configuration identifier of the first RS is the same as part or all of resource configuration identifiers in at least one second resource configuration;
where the second resource configuration is bound to a first report configuration corresponding to a prediction result, and the second resource configuration is used to configure an RS corresponding to input information of the prediction model.

In some embodiments, the first RS meets one of:
the first RS is not bound to a corresponding report configuration;
the first RS is bound to a corresponding report configuration, and a report content indicated in the corresponding report configuration is empty; or
the first RS is bound to a corresponding report configuration, and a report content indicated in the corresponding report configuration is considered to be empty.

In some embodiments, reference may be made to other optional implementation methods recorded before or after the description corresponding to FIG. 4b.

FIG. 4c is a schematic diagram of a communication method according to an embodiment of the present disclosure. As shown in FIG. 4c, an embodiment of the present disclosure relates to a communication method, which is performed by the terminal 101. The above method includes:

Step S4301, the terminal 101 receiving configuration information sent by the network device 102.

In some embodiments, the implementation of step S4301 may refer to the relevant implementation of step S2103, which will not be repeated here.

Step S4302, the terminal 101 measuring the at least one set of RSs in the monitoring stage of the CSI time-domain prediction model to obtain reference CSI.

In some embodiments, the implementation of step S4302 may refer to the relevant implementation of step S2105, which will not be repeated here.

Step S4303, the terminal 101 determining comparison information between the reference CSI and the predicted CSI of the CSI time-domain prediction model.

In some embodiments, the implementation of step S4303 may refer to the relevant implementation of step S2106, which will not be repeated here.

In some embodiments, the comparison information includes at least one of:
NMSE; or
SGCS.

In some embodiments, the reference CSI or the predicted CSI includes at least one of:
channel matrix information;
a codebook parameter predefined or indicated by the network device; or
codeword information of the reference CSI or the predicted CSI under a corresponding codebook parameter.

In some embodiments, reference may be made to other optional implementation methods recorded before or after the description corresponding to FIG. 4c.

FIG. 4d is a schematic diagram of a communication method according to an embodiment of the present disclosure. As shown in FIG. 4d, an embodiment of the present disclosure relates to a communication method, which is performed by the terminal 101. The above method includes:

Step S4401, the terminal 101 sending indication information to the network device 102.

In some embodiments, the implementation of step S4401 may refer to the relevant implementation of step S2101, which will not be repeated here.

Step S4402, the terminal 101 receiving configuration information sent by the network device 102.

In some embodiments, the implementation of step S4402 may refer to the relevant implementation of step S2103, which will not be repeated here.

In some embodiments, reference may be made to other optional implementation methods recorded before or after the description corresponding to FIG. 4d.

FIG. 4e is a schematic diagram of a communication method according to an embodiment of the present disclosure. As shown in FIG. 4e, an embodiment of the present disclosure relates to a communication method, which is performed by the terminal 101. The above method includes:

Step S4501, the terminal 101 sending assistance information to the network device 102.

In some embodiments, the implementation of step S4501 may refer to the relevant implementation of step S2102, which will not be repeated here.

Step S4502, the terminal 101 receiving configuration information sent by the network device 102.

In some embodiments, the implementation of step S4502 may refer to the relevant implementation of step S2103, which will not be repeated here.

In some embodiments, the assistance information includes at least one of:
a quantity of prediction results of the prediction model;
a time interval between prediction results; or
a time interval between a prediction result and input information of the prediction model.

In some embodiments, reference may be made to other optional implementation methods recorded before or after the description corresponding to FIG. 4e.

To facilitate understanding of the embodiments of the present disclosure, some specific examples are listed below:

### Example 1:

A base station configures at least one set of downlink reference signals for a UE, such as Monitor-RS, and this reference signal is at least used for the UE to perform a performance monitoring of an AI-based MIMO enhancement model.

### Example 2:

The RS is used for downlink channel information measurement. For example, monitor-RS is a resource set obtained by combining one or more resources, and this resource set can be periodic, semi-persistent, or aperiodic.

### Example 3:

Monitor RS can be a resource configuration (resource config or setting), including one or more resource sets; or
monitor RS can be a resource set, including one or more resource identifiers (resource ID). For example, a resource set can be configured as Monitor-RS, and this resource set can be an NZP-CSI-RS resource set, a CSI-SSB resource set, or a CSI-IM resource set.

Optionally, Example 3 can be implemented on the basis of Example 2.

For example, the Monitor RS configuration method can refer to the following manner:

Monitor RS configuration: The RRC IE configuration (RRC information element) of Monitor-RS-ResourceSet includes multiple NZP-CSI-RS-ResourceIDs and multiple ZP-CSI-RS-ResourceIDs; the IE configuration corresponding to NZP-CSI-RS-ResourceID or ZP-CSI-RS-ResourceID includes detailed time-frequency resource configuration information.

### Example 4:

The time, and/or frequency, and/or spatial characteristics of the Monitor RS comply with certain rules.

The rules include: in time, the Monitor-RS is at least the same as some CSI reporting moments.

The period of this Monitor RS is configured via RRC, and its period is the same as the period of the report config bound to the resource set where the resource ID is located, or the same as the reporting moment of the bound report config.

The rules include: in frequency, the frequency domain characteristics of the Monitor-RS are the same as those of the resource bound (associated) to the CSI reported at that moment, such as the occupied RB position, the CC where it is located, etc.

In addition, the time-frequency resources (REs) occupied by the Monitor RS within 1 slot are the same as those of the CSI resource setting bound to the CSI report setting.

The resource ID or resource set ID is the same as at least part of the resource IDs/resource set IDs in the resource config/setting bound to at least one CSI report config/setting.

The rules include: in space, the base station needs to ensure that the beamforming, and/or precoder, and/or TCI used by the Monitor-RS and the resource bound to the CSI reported at that moment are the same.

### Example 5:

The UE does not expect that the RS sent by the base station for performance monitoring of the AI CSI prediction model does not comply with any one of the rules in Example 4 above.

### Example 6:

The configuration signaling is RRC.

### Example 7:

For Monitor RS, it is not bound (associated) to a report setting;
or the report quantity corresponding to the bound report setting is "none";
or it is bound to a report setting/report config, but the terminal can ignore the actual content of its report quantity configuration and consider the report quantity as none.

For example, some Monitor RS configuration methods can refer to the following manner:

### Monitor RS is bound to a CSI report config:

The RRC IE Report config includes CSI-ReportConfigId. Furthermore, the IE configuration corresponding to CSI-ReportConfigID includes report quantity, and the report quantity is configured as none;
The RRC IE Report config includes ResourceForChannelMeasurement. Furthermore, the IE configuration corresponding to CSI-ResourceConfigId includes NZP-CSI-RS-ResourceSet. This NZP-CSI-RS-ResourceSet is configured for monitoring, i.e., Monitor-Info ENUMERATED {true};
The RRC IE Report config includes csi-IM-ResourcesForInterference. Furthermore, the IE configuration corresponding to CSI-ResourceConfigId includes ZP-CSI-RS-ResourceSet. This ZP-CSI-RS-ResourceSet is configured for monitoring, i.e., Monitor-Info ENUMERATED {true}.

### Example 8:

The above rules are determined according to assistance information of the UE-side model, and the assistance information includes at least one of:
a quantity of prediction results of the prediction model;
a time interval between prediction results of the prediction model, where the unit of the time interval can be slot, ms, etc.;
a time interval between a prediction result of the prediction model and an input sample, where the unit of the time interval can be slot, ms, etc.

### Example 9:

AI-based MIMO enhancement can be Al-based CSI time-domain prediction.

### Example 10:

After receiving the Monitor-RS, the UE calculates the difference or similarity between the measured channel information and the channel information used for reporting, such as NMSE and SGCS, where the channel information can be:
measured channel matrix information, predicted channel matrix information;
according to a codebook parameter predefined or indicated by the base station, codeword information of the measured channel under the corresponding codebook parameter and codeword information of the predicted channel under the corresponding codebook parameter.

The embodiments of the present disclosure also propose apparatuses for implementing any of the above methods. For example, an apparatus is proposed, and the apparatus includes units or modules for implementing each step executed by the terminal in any of the above methods. For another example, another apparatus is proposed, including units or modules for implementing each step executed by a network device (e.g., an access network device, a core network function node, a core network device, etc.) in any of the above methods.

It should be understood that the division of each unit or module in the above apparatus is only a division of logical functions, and in actual implementation, they may be fully or partially integrated into one physical entity, or may be physically separate. In addition, the units or modules in the apparatus may be implemented in the form of software invoked by a processor: for example, the apparatus includes a processor, the processor is connected to a memory, instructions are stored in the memory, and the processor invokes the instructions stored in the memory to implement any of the above methods or to implement the functions of each unit or module of the above apparatus, where the processor is, for example, a general-purpose processor, such as a central processing unit (CPU) or a microprocessor, and the memory is a memory within the apparatus or an external memory. Alternatively, the units or modules in the apparatus may be implemented in the form of hardware circuits, and the functions of some or all of the units or modules may be implemented by designing the hardware circuits. The above hardware circuits may be understood as one or more processors. For example, in one implementation, the above hardware circuits are application-specific integrated circuits (ASICs), and by designing the logical relationships among the elements in the circuits, the functions of some or all of the above units or modules are implemented. For another example, in another implementation, the above hardware circuits may be implemented by programmable logic devices (PLDs). Taking a Field Programmable Gate Array (FPGA) as an example, it may include a large number of logic gate circuits, and the connection relationships among the logic gate circuits are configured through configuration files to implement the functions of some or all of the above units or modules. All units or modules of the above apparatus may be fully implemented in the form of software invoked by a processor, or fully implemented in the form of hardware circuits, or partially implemented in the form of software invoked by a processor and the remaining part implemented in the form of hardware circuits.

In the embodiments of the present disclosure, a processor is a circuit with signal processing capability. In one implementation, the processor may be a circuit with instruction reading and running capabilities, such as a central processing unit (CPU), a microprocessor, a graphics processing unit (GPU) (which can be understood as a microprocessor), or a digital signal processor (DSP), etc. In another implementation, the processor may implement certain functions through the logical relationships of hardware circuits. The logical relationships of the above hardware circuits are fixed or reconfigurable. For example, the processor is a hardware circuit implemented by an application-specific integrated circuit (ASIC) or a programmable logic device (PLD), such as an FPGA. In a reconfigurable hardware circuit, the process of the processor loading configuration documents to implement hardware circuit configuration can be understood as the process of the processor loading instructions to implement the functions of some or all of the above units or modules. In addition, it may also be a hardware circuit designed for artificial intelligence, which can be understood as an ASIC, such as a Neural Network Processing Unit (NPU), a Tensor Processing Unit (TPU), a Deep learning Processing Unit (DPU), etc.

FIG. 5a is a schematic structural diagram of a terminal 101 according to an embodiment of the present disclosure. As shown in FIG. 5a, the terminal 5100 may include at least one of: a transceiver module 5101, a processing module 5102, etc. In some embodiments, the above transceiver module 5101 is configured to receive configuration information sent by a network device, where the configuration information is used to configure at least one set of first RSs for the terminal, and the at least one set of first RSs is used for the terminal to perform a performance monitoring of a prediction model based on AI or ML.

Optionally, the above transceiver module 5101 is configured to perform at least one of the sending and/or receiving communication steps executed by the terminal 101 in any of the above methods. Optionally, the above processing module 5102 is configured to perform at least one of other steps executed by the terminal 101 in any of the above methods.

FIG. 5b is a schematic structural diagram of a network device 102 according to an embodiment of the present disclosure. As shown in FIG. 5b, the terminal 5200 may include at least one of: a transceiver module 5201, a processing module 5202, etc. In some embodiments, the above transceiver module 5201 is configured to send configuration information to a terminal, where the configuration information is used to configure at least one set of first reference signals (RSs) for the terminal, and the at least one set of first RSs is used for the terminal to perform a performance monitoring of a prediction model based on artificial intelligence (AI) or machine learning (ML).

Optionally, the above transceiver module 5201 is configured to perform at least one of the sending and/or receiving communication steps executed by the network device 102 in any of the above methods. Optionally, the above processing module 5202 is configured to perform at least one of other steps executed by the network device 102 in any of the above methods.

In some embodiments, the transceiver module may include a sending module and/or a receiving module. The sending module and the receiving module may be separate or integrated together. Optionally, the transceiver module may be interchangeable with a transceiver.

In some embodiments, the processing module may be one module or may include multiple sub-modules. Optionally, the above multiple sub-modules respectively perform all or part of the steps required to be performed by the processing module. Optionally, the processing module may be interchangeable with a processor.

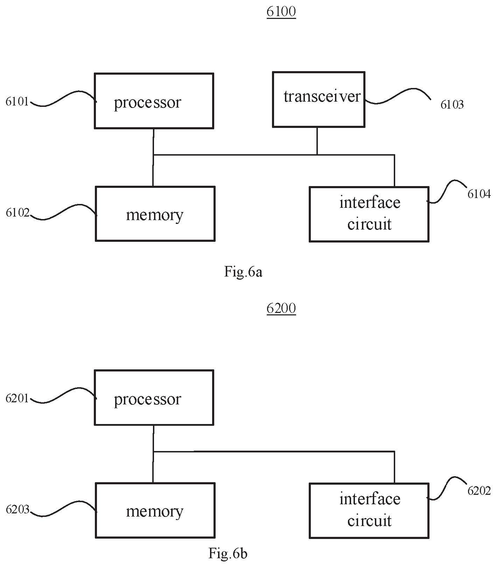

FIG. 6a is a schematic structural diagram of a communication device 6100 according to an embodiment of the present disclosure. The communication device 6100 may be a network device (e.g., an access network device, a core network device, etc.), or may be a terminal (e.g., user equipment, etc.), or may be a chip, chip system, or processor, etc., that supports a network device to implement any of the above methods, or may be a chip, chip system, or processor, etc., that supports a terminal to implement any of the above methods. The communication device 6100 may be used to implement the method described in the above method embodiments. For details, please refer to the description in the above method embodiments.

As shown in FIG. 6a, the communication device 6100 includes one or more processors 6101 and a memory. The processor 6101 may be a general-purpose processor or a special-purpose processor, etc., for example, may be a baseband processor or a central processor. The baseband processor may be used to process communication protocols and communication data, and the central processor may be used to control the communication device (e.g., a base station, a baseband chip, a terminal device, a terminal device chip, a DU, or a CU, etc.), execute programs, and process data of the programs. The communication device 6100 is used to perform any of the above methods.

In some embodiments, the communication device 6100 further includes a memory 6102 coupled to the one or more processors. The memory 6102 is used to store instructions, and one or more memories 6102 may be configured. Optionally, all or part of the memory 6102 may also be outside the communication device 6100.

In some embodiments, the communication device 6100 further includes one or more transceivers 6103. When the communication device 6100 includes one or more transceivers 6103, the transceiver 6103 performs at least one of the sending and/or receiving communication steps in the above method (for example, step S2101, step S2102, but not limited thereto), and the processor 6101 performs at least one of other steps (for example, step S2103, step S2104, S2105, but not limited thereto).

In some embodiments, a transceiver may include a receiver and/or a transmitter. The receiver and the transmitter may be separate or integrated together. Optionally, terms such as transceiver, transceiver unit, transceiver machine, transceiver circuit, etc., may be used interchangeably. Terms such as transmitter, transmitter unit, transmitter machine, transmitter circuit, etc., may be used interchangeably. Terms such as receiver, receiver unit, receiver machine, receiver circuit, etc., may be used interchangeably.

In some embodiments, the communication device 6100 may include one or more interface circuits 6104. Optionally, the interface circuit 6104 is connected to the memory 6102, and the interface circuit 6104 may be used to receive signals from the memory 6102 or other devices, and may be used to send signals to the memory 6102 or other devices. For example, the interface circuit 6104 may read instructions stored in the memory 6102 and send the instructions to the processor 6101.

The communication device 6100 described in the above embodiments may be a network device or a terminal, but the scope of the communication device 6100 described in the present disclosure is not limited thereto. The structure of the communication device 6100 is not limited by FIG. 6a. The communication device may be an independent device or may be part of a larger device. For example, the communication device may be: 1) an independent integrated circuit (IC), or chip, or chip system or subsystem; (2) a set with one or more ICs, optionally, the above set of ICs may also include storage components for storing data and programs; (3) an ASIC, such as a modem (Modem); (4) a module that can be embedded in other devices; (5) a receiver, a terminal device, a smart terminal device, a cellular phone, a wireless device, a handset, a mobile unit, a vehicle-mounted device, a network device, a cloud device, an artificial intelligence device, etc.; (6) others, etc.

FIG. 6b is a schematic structural diagram of a chip 6200 according to an embodiment of the present disclosure. For the case where the communication device 6100 may be a chip or chip system, please refer to the schematic structural diagram of the chip 6200 shown in FIG. 6b, but it is not limited thereto.

The chip 6200 includes one or more processors 6201, and the chip 6200 is used to perform any of the above methods.

In some embodiments, the chip 6200 further includes one or more interface circuits 6202. Optionally, the interface circuit 6202 is connected to a memory 6203. The interface circuit 6202 may be used to receive signals from the memory 6203 or other devices, and the interface circuit 6202 may be used to send signals to the memory 6203 or other devices. For example, the interface circuit 6202 may read instructions stored in the memory 6203 and send the instructions to the processor 6201.

In some embodiments, the interface circuit 6202 performs at least one of the sending and/or receiving communication steps in the above method (for example, step S2101, step S2102, but not limited thereto), and the processor 6201 performs at least one of other steps (for example, step S2103, step S2104, S2105, but not limited thereto).

In some embodiments, terms such as interface circuit, interface, transceiver pin, transceiver, etc., may be used interchangeably.

In some embodiments, the chip 6200 further includes one or more memories 6203 for storing instructions. Optionally, all or part of the memory 6203 may be outside the chip 6200.

The present disclosure also proposes a storage medium, where the storage medium stores instructions which, when run on the communication device 6100, cause the communication device 6100 to perform any of the above methods. Optionally, the above storage medium is an electronic storage medium. Optionally, the above storage medium is a computer-readable storage medium, but is not limited thereto, and it may also be a storage medium readable by other devices. Optionally, the above storage medium may be a non-transitory storage medium, but is not limited thereto, and it may also be a transitory storage medium.

The present disclosure also proposes a program product, where when the program product is executed by the communication device 6100, the communication device 6100 is caused to perform any of the above methods. Optionally, the above program product is a computer program product.

The present disclosure also proposes a computer program, where when run on a computer, the computer is caused to perform any of the above methods.

### Industrial Applicability

In the method of the present disclosure, the network device sends configuration information to the terminal, thereby configuring a first RS for the terminal for performance monitoring of a prediction model based on AI or ML, so that the terminal can perform measurement according to the corresponding first RS to perform a performance monitoring of the prediction model.

## Claims

1. A communication method, comprising:
sending, by a network device, configuration information to a terminal, wherein the configuration information is used to configure at least one set of first reference signals (RSs) for the terminal, and the at least one set of first RSs is used for the terminal to perform a performance monitoring of a prediction model based on an artificial intelligence (AI) or a machine learning (ML).

2. The method according to claim 1, wherein
the prediction model is used for a time-domain prediction of channel state information (CSI).

3. The method according to claim 2, wherein
the at least one set of first RSs is used to be measured by the terminal to obtain reference CSI corresponding to a monitoring stage of the prediction model.

4. The method according to any one of claims 1 to 3, wherein
a first RS in the at least one set of first RSs includes one or more resources, and the one or more resources respectively have corresponding resource identifiers.

5. The method according to claim 4, wherein
a first RS in the at least one set of first RSs comprises one or more first resource sets, and the one or more first resource sets respectively comprise one or more resources.

6. The method according to claim 5, wherein
a first RS in the at least one set of first RSs comprises one or more first resource configurations, and the one or more first resource configurations respectively comprise one or more first resource sets.

7. The method according to claim 5 or 6, wherein the one or more first resource sets comprise at least one of:
a non-zero power channel state information reference signal (NZP-CSI-RS) resource set;
a channel state information synchronization signal block (CSI-SSB) resource set;
a zero power channel state information reference signal (ZP-CSI-RS) resource set; or
a channel state information interference measurement (CSI-IM) resource set.

8. The method according to claim 6, wherein
at least one of the one or more resources, the one or more first resource sets and the one or more first resource configurations is periodic, semi-persistent, or aperiodic.

9. The method according to any one of claims 1 to 8, wherein a first RS in the at least one set of first RSs meets at least one of:
a first condition in a time domain;
a second condition in a frequency domain;
a third condition in a time-frequency domain; or
a fourth condition in a spatial domain.

10. The method according to claim 9, wherein the first condition comprises at least one of:
a first time at which the first RS is located is the same with a second time or differs from a second time within a set range, wherein the second time is a prediction time corresponding to at least part of prediction results of the prediction model; or
a first period is the same as a second period, wherein the first period is a transmission period of the first RS configured by the network device, and the second period is a reporting period of the at least part of prediction results indicated by the network device through a first report configuration.

11. The method according to claim 9 or 10, wherein
the first report configuration is bound to a first resource configuration, and the first resource configuration comprises a first resource set in which a resource identifier of the first RS is located.

12. The method according to claim 10, wherein
the prediction time comprises a reporting time of the at least part of prediction results, and
the at least part of prediction results is predicted CSI, and the reporting time is indicated by the network device through a report configuration corresponding to the at least part of prediction results.

13. The method according to claim 9, wherein the second condition comprises:
frequency domain information of the first RS is the same with frequency domain information corresponding to a second resource configuration, wherein the second resource configuration is bound to a first report configuration corresponding to a prediction result, and the second resource configuration is used to configure an RS corresponding to input information of the prediction model.

14. The method according to claim 13, wherein the frequency domain information comprises at least one of:
an occupied resource block (RB) position;
occupied wideband or narrowband information;
an occupied bandwidth part (BWP);
an occupied frequency band or frequency range (FR); or
an occupied carrier.

15. The method according to claim 13, wherein the third condition comprises:
the first RS and the second resource configuration occupy the same time-frequency resource (RE) within one RB.

16. The method according to claim 9, wherein the fourth condition comprises at least one of:
the first RS uses the same beam shape with a second resource configuration;
the first RS uses the same precoding matrix with a second resource configuration;
the first RS uses the same transmission configuration indicator (TCI) with a second resource configuration; or
the first RS uses the same quasi-co-location (QCL) with a second resource configuration;
wherein the second resource configuration is bound to a first report configuration corresponding to a prediction result, and the second resource configuration is used to configure an RS corresponding to input information of the prediction model.

17. The method according to any one of claims 9 to 16, wherein
a resource identifier of the first RS is the same as a part or all of resource identifiers in at least one second resource configuration; and/or
a resource set identifier of the first RS is the same as a part or all of resource set identifiers in at least one second resource configuration; and/or
a resource configuration identifier of the first RS is the same as a part or all of resource configuration identifiers in at least one second resource configuration;
wherein the second resource configuration is bound to a first report configuration corresponding to a prediction result, and the second resource configuration is used to configure an RS corresponding to input information of the prediction model.

18. The method according to any one of claims 9 to 16, further comprising:
receiving, by the network device, indication information sent by the terminal, wherein the indication information is used to indicate that the terminal does not expect that the first RS configured does not meet any of the first condition, the second condition, the third condition or the fourth condition.

19. The method according to any one of claims 9 to 16, further comprising:
receiving, by the network device, assistance information sent by the terminal, wherein the assistance information is used to indicate information of the prediction model, and at least one of the first condition, the second condition, the third condition or the fourth condition is determined according to the assistance information.

20. The method according to claim 19, wherein the assistance information comprises at least one of:
a quantity of prediction results of the prediction model;
a time interval between prediction results of the prediction model; or
a time interval between a prediction result and input information of the prediction model.

21. The method according to any one of claims 1 to 20, wherein a first RS in the at least one set of first RSs meets one of:
the first RS is not bound to a corresponding report configuration;
the first RS is bound to a corresponding report configuration, and a report content indicated in the corresponding report configuration is empty; or
the first RS is bound to a corresponding report configuration, and a report content indicated in the corresponding report configuration is considered to be empty.

22. A communication method, comprising:
receiving, by a terminal, configuration information sent by a network device, wherein the configuration information is used to configure at least one set of first reference signals (RSs) for the terminal, and the at least one set of first RSs is used for the terminal to perform a performance monitoring of a prediction model based on an artificial intelligence (AI) or a machine learning (ML).

23. The method according to claim 22, wherein
the prediction model is used for a time-domain prediction of channel state information (CSI).

24. The method according to claim 23, further comprising:
measuring, by the terminal, the at least one set of first RSs in a monitoring stage of the prediction model to obtain reference CSI; and
determining, by the terminal, comparison information between the reference CSI and predicted CSI of the prediction model.

25. The method according to claim 24, wherein the comparison information comprises at least one of:
a normalized mean square error (NMSE); or
a square of generalized cosine similarity (SGCS).

26. The method according to claim 24, wherein the reference CSI or the predicted CSI comprises at least one of:
channel matrix information;
a codebook parameter predefined or indicated by the network device; or
codeword information of the reference CSI or the predicted CSI under a corresponding codebook parameter.

27. The method according to any one of claims 22 to 26, wherein
a first RS in the at least one set of first RSs includes one or more resources, and the one or more resources respectively have corresponding resource identifiers.

28. The method according to claim 27, wherein
a first RS in the at least one set of first RSs comprises one or more first resource sets, and the one or more first resource sets respectively comprise one or more resources.

29. The method according to claim 28, wherein
a first RS in the at least one set of first RSs comprises one or more first resource configurations, and the one or more first resource configurations respectively comprise one or more first resource sets.

30. The method according to claim 28 or 29, wherein the one or more first resource sets comprise at least one of:
a non-zero power channel state information reference signal (NZP-CSI-RS) resource set;
a zero power channel state information reference signal (ZP-CSI-RS) resource set;
a channel state information synchronization signal block (CSI-SSB) resource set; or
a channel state information interference measurement (CSI-IM) resource set.

31. The method according to claim 29, wherein
at least one of the one or more resources, the one or more first resource sets and the one or more first resource configurations is periodic, semi-persistent, or aperiodic.

32. The method according to any one of claims 22 to 31, wherein a first RS in the at least one set of first RSs meets at least one of:
a first condition in a time domain;
a second condition in a frequency domain;
a third condition in a time-frequency domain; or
a fourth condition in a spatial domain.

33. The method according to claim 32, wherein the first condition comprises at least one of:
a first time at which the first RS is located is the same with a second time or differs from a second time within a set range, wherein the second time is a prediction time corresponding to at least part of prediction results of the prediction model; or
a first period is the same as a second period, wherein the first period is a transmission period of the first RS configured by the network device, and the second period is a reporting period of the at least part of prediction results indicated by the network device through a first report configuration.

34. The method according to claim 32 or 33, wherein
the first report configuration is bound to a first resource configuration, and the first resource configuration comprises a first resource set in which a resource identifier of the first RS is located.

35. The method according to claim 33, wherein
the prediction time comprises a reporting time of the at least part of prediction results, and
the at least part of prediction results is predicted CSI, and the reporting time is indicated by the network device through a report configuration corresponding to the at least part of prediction results.

36. The method according to claim 32, wherein the second condition comprises:
frequency domain information of the first RS is the same with frequency domain information corresponding to a second resource configuration, wherein the second resource configuration is bound to a first report configuration corresponding to a prediction result, and the second resource configuration is used to configure an RS corresponding to input information of the prediction model.

37. The method according to claim 36, wherein the frequency domain information comprises at least one of:
an occupied resource block (RB) position;
occupied wideband or narrowband information;
an occupied bandwidth part (BWP);
an occupied frequency band or frequency range (FR); or
an occupied carrier.

38. The method according to claim 36, wherein the third condition comprises:
the first RS and the second resource configuration occupy the same time-frequency resource (RE) within one RB.

39. The method according to claim 32, wherein the fourth condition comprises at least one of:
the first RS uses the same beam shape with a second resource configuration;
the first RS uses the same precoding matrix with a second resource configuration;
the first RS uses the same transmission configuration indicator (TCI) with a second resource configuration; or
the first RS uses the same quasi-co-location (QCL) with a second resource configuration;
wherein the second resource configuration is bound to a first report configuration corresponding to a prediction result, and the second resource configuration is used to configure an RS corresponding to input information of the prediction model.

40. The method according to any one of claims 32 to 39, wherein
a resource identifier of the first RS is the same as a part or all of resource identifiers in at least one second resource configuration; and/or
a resource set identifier of the first RS is the same as a part or all of resource set identifiers in at least one second resource configuration; and/or
a resource configuration identifier of the first RS is the same as a part or all of resource configuration identifiers in at least one second resource configuration;
wherein the second resource configuration is bound to a first report configuration corresponding to a prediction result, and the second resource configuration is used to configure an RS corresponding to input information of the prediction model.

41. The method according to any one of claims 32 to 39, further comprising:
sending, by the terminal, indication information to the network device, wherein the indication information is used to indicate that the terminal does not expect that the first RS configured does not meet any of the first condition, the second condition, the third condition or the fourth condition.

42. The method according to any one of claims 32 to 39, further comprising:
sending, by the terminal, assistance information to the network device, wherein the assistance information is used to indicate information of the prediction model, and at least one of the first condition, the second condition, the third condition or the fourth condition is determined according to the assistance information.

43. The method according to claim 42, wherein the assistance information comprises at least one of:
a quantity of prediction results of the prediction model;
a time interval between prediction results of the prediction model; or
a time interval between a prediction result and input information of the prediction model.

44. The method according to any one of claims 22 to 43, wherein a first RS in the at least one set of first RSs meets one of:
the first RS is not bound to a corresponding report configuration;
the first RS is bound to a corresponding report configuration, and a report content indicated in the corresponding report configuration is empty; or
the first RS is bound to a corresponding report configuration, and a report content indicated in the corresponding report configuration is considered to be empty.

45. A network device, comprising:
a transceiver module configured to send configuration information to a terminal, wherein the configuration information is used to configure at least one set of first reference signals (RSs) for the terminal, and the at least one set of first RSs is used for the terminal to perform a performance monitoring of a prediction model based on an artificial intelligence (AI) or a machine learning (ML).

46. A terminal, comprising:
a transceiver module configured to receive configuration information sent by a network device, wherein the configuration information is used to configure at least one set of first RSs for the terminal, and the at least one set of first RSs is used for the terminal to perform a performance monitoring of a prediction model based on an AI or an ML.

47. A network device, comprising one or more processors,
wherein the network device is configured to perform the method according to any one of claims 1 to 21.

48. A terminal, comprising one or more processors,
wherein the terminal is configured to perform the method according to any one of claims 22 to 44.

49. A communication system, comprising a network device and a terminal, wherein
the network device is configured to perform the method according to any one of claims 1 to 21, and
the terminal is configured to perform the method according to any one of claims 22 to 44.

50. A storage medium, having stored therein instructions that, when executed by a communication device, caused the communication device to perform the method according to any one of claims 1 to 21 or the method according to any one of claims 22 to 44.
